# EUROPÄISCHE PATENTSCHRIFT

(11) **EP 0 930 990 B1**
(45) Veröffentlichungstag und Bekanntmachung des Hinweises auf die Patenterteilung: **03.12.2003**
(21) Anmeldenummer: 98943659.7
(22) Anmeldetag: 09.07.1998
(51) Int. Cl.: B60S 1/38

(54) **WISCHBLATT FÜR SCHEIBEN VON KRAFTFAHRZEUGEN**
GLASS WIPER BLADE FOR MOTOR VEHICLES
RACLETTE D'ESSUIE-GLACE DE VEHICULES A MOTEUR

(30) Priorität: 21.08.1997 DE 19736368
(43) Veröffentlichungstag der Anmeldung: 28.07.1999
(73) Patentinhaber: ROBERT BOSCH GMBH, 70442 Stuttgart (DE)
(72) Erfinder: MERKEL, Wilfried, D-77876 Kappelrodeck (DE); LEUTSCH, Wolfgang, D-77830 Bühlertal (DE); KOTLARSKI, Thomas, D-77830 Bühlertal (DE); DON, Friedrich, D-71332 Waiblingen (DE)
(86) Internationale Anmeldenummer: DE9801893
(87) Internationale Veröffentlichungsnummer: WO99010211

(56) Entgegenhaltungen:
- EP-A- 0 316 114
- DE-A- 2 336 271
- FR-A- 2 199 302
- US-A- 5 546 627

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld an der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird.

Die Erfindung geht aus von einem Wischblatt nach der Gattung des Anspruchs 1. Bei einem bekannten Wischblatt ähnlicher Art (DE-PS 12 47 161) kann einmal das Wischblatt bzw. A dessen aus Gründen der Auflage-Druckverteilung im Wischblatt-Mittelbereich weit über die Wischleiste ragende Tragelement auf der dem Fahrtwind zugewandten Vorderseite unter dem Aufbau eines Überdrucks von diesem untergriffen werden. Andererseits baut sich auf der von dem Fahrtwind abgewandten Rückseite wegen der erwähnten Bauform ein erheblicher Unterdruck auf. Zwar verändert das im Betrieb meist eine Pendelbewegung ausführende Wischblatt seine Lage in bezug auf den anströmenden Fahrtwind ständig, doch ist auch dann stets seine eine Längsseite diesem mehr oder weniger stark zugewandt und wird deshalb auch als Vorderseite bezeichnet, während seine andere Längsseite demzufolge auch als Rückseite angesehen wird. Im Zusammenwirken dieser beiden vorerwähnten Drucke, die beide dem Wischblatt-Anpressdruck entgegengerichtet sind, wird dieser bei höheren Fahrgeschwindigkeiten zumindest so verringert, dass kein ordnungsgemäßes Wischergebnis mehr möglich ist. Eine Verstärkung des Wischblatt-Anpressdrucks gegen die Scheibe mag bei hohen Fahrgeschwindigkeiten zwar dieses Problem verkleinern, doch bei geringeren Fahrgeschwindigkeiten, wenn das Abhebebestreben verringert wird, erhöht sich aber die Reibung zwischen Wischblatt und Scheibe, was zu einer unerwünschten Geräuschbildung und zur unzulässig hohen Belastung der Antriebskomponenten führt.

In der EP-A-0 316 114 ist ein Wischblatt gezeigt, das eine langgestreckte, gummielastische Wischleiste aufweist, die von einem Tragelement gehalten ist. Dieses Tragelement weist eine Rippenstruktur auf, die auch als Rückgrad bezeichnet wird. Die Federelastizität wird bei diesem System durch zwei notwendige Komponenten erzeugt, dem Tragelement mit nach oben offenen Schlitzen oder Kammern und einer Art Kappe, die in diese Schlitze oder Kammern unter Vorspannung eingreift. Die Kappe wird entweder in einem aufwendigen Prozess direkt in die Schlitze oder Öffnungen eingespritzt oder eingeschoben. Dazu muss das Tragelement vorgebogen, in dieser Position fixiert und entweder in einer genau passenden Spritzgussform positioniert werden oder aber es müssen die einzelnen in die Schlitze greifenden Vorsprünge eingefädelt werden. Solche Prozesse sind unakzeptabel aufwendig und anfällig bei der Montage.

Bei einem in der FR-A-2 199 302 gezeigten Wischblatt ist in einem Tragelement (Halter) ein Führungskanal integriert, in dem sowohl eine Wischleiste als auch eine Metallschiene untergebracht werden müssen. Die Metallschiene übernimmt zusammen mit dem Halter die Verteilung der Druckbelastung auf die Wischleiste. Dabei muss der Halter als das tragende Element im wesentlichen einen konstante Querschnitt aufweisen, in dessen unterem Bereich in seinem inneren eine Vielzahl von Aussparungen angeordneten sind, die es dem Halter ermöglichen, sich im Richtungen zu verformen die etwa in der Mitte Ebene liegen, welche durch dieses Wischblatt und die wirksame Kante des Gummielements verläuft. Damit mag sich die notwendige Auflagekraftverteilung optimieren lassen, es verbleibt aber auch hier ein aufwendig zu montierendes Wischblatt, bei dem die Wischleiste und eine Metallschiene in einen engen Hohlkanal eingefädelt werden müssen.

### Vorteile der Erfindung

Bei dem erfindungsgemäßen Wischblatt mit den kennzeichnenden Merkmalen des Anspruchs 1 wird über die dem Fahrtwind zugewandte Anströmfläche eine zur Scheibe gerichtete Kraftkomponente aufgebaut, welche dem Abhebebestreben der beiden Drucke entgegenwirkt und so für eine hervorragende Reinigungsqualität im für den Fahrzeuglenker wichtigen Bereich des vom Wischblatt überstrichenen Wischfeldes sorgt. Je nach Größe der Anströmfläche und/oder je nach Größe des Anstellwinkels α kann dieser Hilfs-Anlegedruck den veränderlichen, vom Fahrzeugtyp abhängigen Forderungen angepasst werden. Weiter ist bei der erfindungsgemäßen Lösung von Vorteil, dass der Anpressdruck als Funktion der Fahrgeschwindigkeit mit dieser ansteigt oder abfällt. Es wird also nur dem bei großer Geschwindigkeit auftretenden störenden Abhebebestreben ein entsprechend "großer Hilfsanpressdruck" entgegengesetzt. Ein kompaktes Wischblatt ergibt sich, wenn die Anströmfläche an der von der Scheibe abgewandten Fläche des Tragelements angeordnet ist. Der Hilfsanpressdruck ist dabei nicht punktförmig sondern flächig über die ganze Wischblattlänge verteilt. Die Ausbildung einer Anströmfläche wird auf vorteilhafte Weise dadurch erreicht, dass diese an einem separaten, mit dem Tragelement des Wischblatts fest verbundenen, langgestreckten Bauteil ausgebildet ist.

Ein einfacher Aufbau einer solchen separaten Bauteils ergibt sich dadurch, dass dieses im Querschnitt gesehen zumindest annährend die Form eines Dreiecks hat, dessen eine Seite an der von der Scheibe abgewandten Fläche des Tragelements anliegt und weiter an einer anderen Seite des Dreiecks die Anströmfläche ausgebildet ist. In bestimmten Fällen kann es von Vorteil sein, die Anströmfläche zumindest partiell mit einer dem Fahrtwind zugewandten Hohlkrümmung auszustatten.

Eine kostengünstige Befestigung des Bauteils an der einen Seite des Tragelements wird durch eine Klebeverbindung erreicht. Damit die durch das Tragelement bewirkte Verteilung des Anpressdrucks nicht beeinträchtigt wird, ist das Bauteil aus einem gummielastischen Material gefertigt, dessen Härte nicht größer, vorzugsweise geringer ist als die Härte der gummielastischen Wischleiste. Fertigungstechnische Vorteile ergeben sich bei der Herstellung des Bauteils aus einem entsprechenden Kunststoff.

Die Länge und die in Arbeitsrichtung des Wischblatts projizierte Breite bzw. Höhe der Anströmfläche werden entsprechend den Erfordernissen ausgelegt. In bestimmten Fällen ist es zweckmäßig, wenn sich die Anströmfläche wenigstens annähernd über die gesamte Länge des Wischblatts erstreckt.

Weitere, vorteilhafte Weiterbildungen und Ausgestaltungen der Erfindung sind in der nachfolgenden Beschreibung eines in der dazugehörigen Zeichnung dargestellten Ausführungsbeispiels angegeben.

### Zeichnung

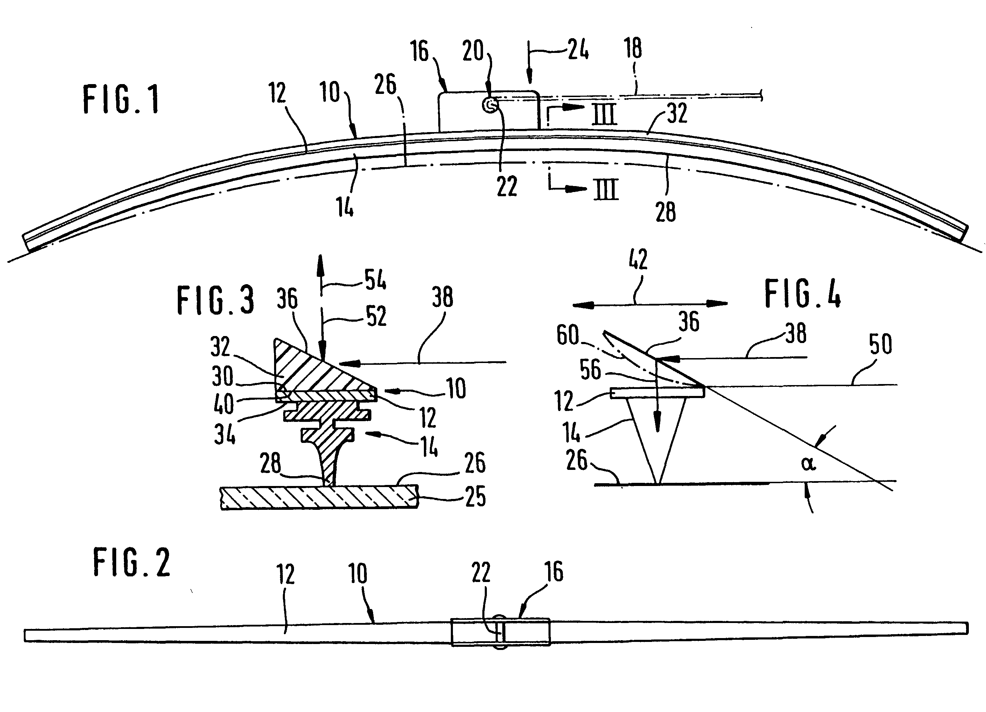

In der Zeichnung zeigen: Figur 1 eine Seitenansicht eines erfindungsgemäßen Wischblatts, Figur 2 eine Draufsicht auf das Wischblatt gemäß Figur 1, Figur 3 einen Schnitt durch das Wischblatt entlang der Linie III-III, vergrößert und gegenständlich dargestellt und Figur 4 eine Prinzipdarstellung des Wischblatts gemäß Figur 3.

### Beschreibung des Ausführungsbeispiels

Ein in den Figuren 1 und 2 dargestelltes Wischblatt 10 weist ein ein- oder mehrteiliges, langgestrecktes, federelastisches Tragelement 12 auf, an dessen Unterseite eine langgestreckte, gummielastischee Wischleiste 14 längsachsenparallel befestigt ist. An der Oberseite des Tragelements 12 ist eine Anschlußvorrichtung 16 angeordnet, mit deren Hilfe das Wischblatt 10 mit einem angetriebenen Wischerarm 18 lösbar verbunden werden kann. An dem freien Ende 20 des Wischerarms 18 ist ein als Gegenanschlußmittel dienender Haken angeformt, welcher einen zur Anschlußvorrichtung 16 des Wischblatts gehörenden Gelenkbolzen 20 umgreift. Die Sicherung zwischen dem Wischerarm 18 und dem Wischblatt 10 wird durch nicht näher dargestellte, an sich bekannte, als Adapter ausgebildete Sicherungsmittel übernommen. Der Wischerarm 18 und damit auch der Haken am Ende 20 ist in Richtung des Pfeiles 24 zur zu wischenden Scheibe belastet, deren zu wischende Oberfläche in Figur 1 durch eine strichpunktierte Linie 26 angedeutet ist. Da die strichpunktierte Linie 26 die stärkste Krümmung der Scheibenoberfläche darstellen soll, ist klar ersichtlich, daß die Krümmung des mit seinen beiden Enden an der Scheibe anliegenden Wischblatts 10 stärker ist als die maximale Scheibenkrümmung. Unter dem Anpreßdruck (Pfeil 24) legt sich das wischblatt mit seiner Wischlippe 28 über seine gesamte Länge an der Scheibenoberfläche 26 an. Dabei baut sich im federelastischen Tragelement 12 eine Spannung auf, welche für eine ordnungsgemäße Anlage der Wischleiste 14 bzw. der Wischlippe 28 über deren gesamte Länge an der Kraftfahrzeugscheibe sorgt.

Im folgenden soll die besondere Ausgestaltung des Wischblatts 10 insbesondere anhand der Figuren 3 und 4 näher erläutert werden. An der von der Windschutzscheibe 25 abgewandten oberen Fläche 30 des bandartigen Tragelements 12 ist ein sich in Längsrichtung des Wischblatts 10 erstreckendes ein- oder mehrteiliges Bauteil 32 befestigt, das aus einem gummielastischen Material vorzugsweise einem Kunststoff hergestellt ist, dessen Härte geringer als die Härte der gummielastischen Wischleiste 14. Diese Wischleiste 14 ist an der unteren, der Scheibe 25 zugewandten Fläche 34 des Tragelements 12 angeordnet. Wie Figur 1 zeigt, erstreckt sich das Bauteil 32 über die gesamte Länge des Wischblatts 10. Es weist einen Querschnitt auf, der die Form eines Dreiecks oder eines Keils hat (Figur 3). Beim Ausführungsbeispiel ist dazu die Form eines ungleichschenkligen Dreiecks gewählt worden. Die längste Seite 36 dieses Dreiecks bildet eine Anströmfläche für den Fahrtwind des Kraftfahrzeuges, der in Figur 3 durch den Pfeil 38 symbolisiert ist. Eine zweite, kürzere Seite 40 der Dreiecksform ist der oberen Fläche 30 des Tragelements 12 zugewandt. Die beiden einander zugewandten Flächen des Tragelements 12 und 40 des Bauteils 32 sind durch Kleben miteinander verbunden.

Zur Erläuterung der Wirkungsweise des erfindungsgemäßen Wischblatts wird nun auf die Figur 4 verwiesen, in welcher alle dazu notwendigen Teile des Wischblatts prinzipiell dargestellt sind. Während des Betriebs des Wischnblatts, dessen Arbeitsbewegung durch den Doppelpfeil 42 angedeutet ist, wenn dieses mit seiner Wischleiste 14 über die Oberfläche 26 der Scheibe 25 verschoben wird, befindet sich das Tragelement 12 in einer Ebene 50, welche im wesentlichen parallel zur Oberfläche 26 der Scheibe 25 verläuft. Dabei erfährt das Wischblatt 10 einen Auflagedruck 52 (Figur 3), dem während des Betriebs des Wischblatts, insbesondere bei hohen Fahrgeschwindigkeiten, ein in Richtung des Pfeiles 54 in Figur 4 wirkendes Abhebebestreben entgegengerichtet ist. Da die Anströmfläche 36 des Bauteils 30 dem Fahrtwind 38 zugewandt ist, wobei sie mit der Oberfläche 26 der Scheibe 25 einen spitzen Winkel α einschließt, erzeugt der Druck des Fahrtwindes 38 eine Kraftkomponente, die in Figur 4 durch den Pfeil 56 dargestellt ist. Diese Kraftkomponente 56 wirkt dem Abhebebestreben (Pfeil 54) in Figur 3 entgegen und hält somit den Auflagedruck (Pfeil 52) im vorschriftsmäßigen Bereich. Abweichend von der in Figur 3 gezeigten exakt dreiecksförmigen Querschnittsform des Bauteils 12 kann dieses auch so ausgebildet sein, daß seine dem Fahrtwind 38 zugewandte Seite mit einer Hohlkrümmung 60 versehen ist, die in Figur 4 durch eine strichpunktierte Linie dargestellt ist. Aber auch mit der Anordnung einer Hohlkrümmung an der dem Fahrtwind 38 zugewandten Seite behält das Bauteil 30 seine im Prinzip dreieckige Querschnittsform und damit auch die Möglichkeit der Ausbildung einer Kraftkomponente (Pfeil 56 in Figur 4) aus dem Anströmdruck, mit welcher der Fahrtwind (Pfeil 38) auf die gekrümmte Anströmfläche 60 trifft.

## Patentansprüche

1. Wischblatt (10) für Scheiben (25) von Kraftfahrzeugen, mit einer an der zu wischenden Scheibe anlegbaren, langgestreckten, gummielastischen Wischleiste (14), die im wesentlichen längsachsenparallel an einem federelastischen Tragelement (12) angeordnet ist, an welchem an einer oberen Fläche (30) eine Anschlussvorrichtung angeordnet ist, welche mit einem quer zur Längserstreckung des Wischblatts angetriebenen, zur Scheibe belastbaren Wischerarm (18) verbindbar ist, wobei das Wischblatt (10) mit einer sich in seiner Längsrichtung und im wesentlichen parallel zur Scheibe (25) erstreckenden, dem Fahrtwind (38) zugewandten Anströmfläche (36 bzw. 60) versehen ist, die quer zu ihrer Längserstreckung gesehen mit der Scheibe einen spitzen Winkel (α) einschließt, **dadurch gekennzeichnet, dass** das Tragelement bandartig ausgebildet ist mit einer unteren Fläche (34), an der die Wischleiste und der oberen Fläche (30), an der die Anströmfläche (36 bzw. 60) angeordnet ist und dass die Anströmfläche (36 bzw. 60) an einem separaten, mit dem Tragelement (12) fest verbundenen, langgestreckten Bauteil (32) ausgebildet ist.

2. Wischblatt nach Anspruch 1, **dadurch gekennzeichnet, dass** das Bauteil (32) im Querschnitt gesehen zumindest annähernd die Form eines Dreiecks hat, dessen eine Seite (40) an der von der Scheibe (25) abgewandten Fläche (30) des Tragelements (12) anliegt und an einer anderen Seite des Dreiecks die Anströmfläche (36 bzw. 60) ausgebildet ist.

3. Wischblatt nach Anspruch 2, **dadurch gekennzeichnet, dass** die Anströmfläche (60) im Querschnitt gesehen zumindest partiell einem dem Fahrtwind (38) zugewandte Hohlkrümmung (60) hat.

4. Wischblatt nach einem der Ansprüche 2 oder 3, **dadurch gekennzeichnet, dass** das Bauteil (32) an die eine Seite (30) des Tragelements (12) angeklebt ist.

5. Wischblatt nach einem der Ansprüche 1 bis 4, **dadurch gekennzeichnet, dass** das Bauteil (32) aus einem gummielastischem Material gefertigt ist, dessen Härte nicht größer ist als die Härte der gummielastischen Wischleiste (14).

6. Wischblatt nach einem der Ansprüche 1 bis 5, **dadurch gekennzeichnet, dass** das Bauteil (32) aus einem Kunststoff hergestellt ist.

7. Wischblatt nach einem der Ansprüche 1 bis 6, **dadurch gekennzeichnet, dass** sich die Anströmfläche (36 bzw. 60) wenigstens annähernd über die gesamte Länge des Wischblatts (10) erstreckt.

## Claims

1. Wiper blade (10) for windows (25) of motor vehicles, having an elongate, rubber-elastic wiper strip (14) which can be placed against the window to be wiped and is arranged essentially parallel to the longitudinal axis on a resilient supporting element (12) on which a connecting device is arranged on an upper surface (30), said connecting device being connectable to a wiper arm (18) which is driven transversely with respect to the longitudinal extent of the wiper blade and can be loaded towards the window, the wiper blade (10) being provided with an incident-flow surface (36 or 60) which extends in its longitudinal direction and is essentially parallel to the window (25), faces the relative wind (38) and, as seen transversely with respect to its longitudinal extent, encloses an acute angle (α) with the window, **characterized in that** the supporting element is of band-like design with a lower surface (34), on which the wiper strip is arranged, and the upper surface (30), on which the incident-flow surface (36 or 60) is arranged, and **in that** the incident-flow surface (36 or 60) is formed on a separate, elongate component (32) connected fixedly to the supporting element (12).

2. Wiper blade according to Claim 1, **characterized in that** the component (32), as seen in cross section, has at least approximately the form of a triangle, the one side (40) of which bears against that surface (30) of the supporting element (12) which faces away from the window (25), and the incident-flow surface (36 or 60) is arranged on another side of the triangle.

3. Wiper blade according to Claim 2, **characterized in that** the incident-flow surface (60) has, as seen in cross section, at least in part a hollow curvature (60) which faces the relative wind (38).

4. Wiper blade according to either of Claims 2 and 3, **characterized in that** the component (32) is bonded to the one side (30) of the supporting element (12).

5. Wiper blade according to one of Claims 1 to 4, **characterized in that** the component (32) is manufactured from a rubber-elastic material, the hardness of which is not greater than the hardness of the rubber-elastic wiper strip (14).

6. Wiper blade according to one of Claims 1 to 5, **characterized in that** the component (32) is produced from a plastic.

7. Wiper blade according to one of Claims 1 to 6, **characterized in that** the incident-flow surface (36 or 60) extends at least approximately over the entire length of the wiper blade (10).

## Revendications

1. Raclette d'essuie-glace (10) pour vitre (25) de véhicule avec une barrette d'essuyage (14) en caoutchouc élastique s'étendant longitudinalement pouvant être appliquée sur la vitre à essuyer, essentiellement parallèle à l'axe longitudinal sur un élément de support élastique (12) portant un dispositif de raccord à une surface supérieure (30) qui peut être reliée à un bras d'essuie-glace (12) pouvant exercer une pression sur la vitre et entraîné transversalement à la direction longitudinale de la raclette d'essuie-glace, la raclette d'essuie-glace (10) étant prévue avec une surface d'écoulement (36, 60), s'étendant dans sa direction longitudinale et essentiellement parallèle à la vitre (25), tournée au vent de conduite (38) qui transversalement par rapport à sa direction longitudinale, fait avec la vitre un angle aigu α,
**caractérisée en ce que**
l'élément de support est réalisé en forme de bande ayant une surface inférieure (34) portant la barrette d'essuie-glace et une surface supérieure (30) portant la surface d'écoulement (36, 60), et la surface d'écoulement (36, 60) est réalisée sur une pièce de construction longitudinale (32) séparée reliée de manière fixe avec l'élément de support (12).

2. Raclette d'essuie-glace (10) pour vitre (25) de véhicule selon la revendication 1,
**caractérisée en ce que**
la pièce (32) a une section ayant au moins approximativement la forme d'un triangle dont l'un des côtés (40) repose sur la surface (30) de l'élément de support opposé à la vitre (25) et la surface d'écoulement (36, 60) est réalisée sur l'un des côtés du triangle.

3. Raclette d'essuie-glace (10) pour vitre (25) de véhicule selon la revendication 2,
**caractérisée en ce que**
la surface d'écoulement (60) a une section ayant au moins partiellement une courbure creuse (60) tournée vers le vent de conduite (38).

4. Raclette d'essuie-glace (10) pour vitre (25) de véhicule selon l'une des revendications 2 ou 3,
**caractérisée en ce que**
la pièce (32) est collée à l'un des côtés (30) de l'élément de support (12).

5. Raclette d'essuie-glace (10) pour vitre (25) de véhicule selon l'une des revendications 1 à 4,
**caractérisée en ce que**
la pièce (32) est réalisée en un caoutchouc élastique dont la dureté n'est pas plus grande que la dureté de la barrette d'essuie-glace (14) en caoutchouc élastique.

6. Raclette d'essuie-glace (10) pour vitre (25) de véhicule selon l'une des revendications 1 à 5,
**caractérisée en ce que**
la pièce (32) est réalisée en matériau synthétique.

7. Raclette d'essuie-glace (10) pour vitre (25) de véhicule selon l'une des revendications 1 à 6,
**caractérisée en ce que**
la surface d'écoulement (36, 60) s'étend au moins approximativement sur toute la longueur de la raclette d'essuie-glace (10).
